# EUROPEAN PATENT APPLICATION

(11) **EP 2 944 606 A1**
(43) Date of publication of application: **18.11.2015**
(21) Application number: 14305713.1
(22) Date of filing: 15.05.2014
(51) Int. Cl.: C01B 3/38, C01B 3/48, C10G 2/00

(54) **Process for generating hydrogen from a fischer-tropsch off-gas**

(71) Applicant: L'Air Liquide Société Anonyme pour l'Etude et l'Exploitation des Procédés Georges Claude, 75007 Paris (FR)
(72) Inventor: Chambron, Nicolas, 94130 Nogent sur Marne (FR); Leclerc, Mathieu, 75020 Paris (FR); Marty, Pascal, 94360 Bry sur Marne (FR); Shaver, Matthew, Houston, TX Texas 77001 (US)
(74) Representative: Mercey, Fiona Susan

(57) **Abstract**

A process for generating Fischer-Tropsch liquid hydrocarbons and for generating H₂ and CO₂ from a Fischer-Tropsch off-gas, comprising the steps of:
(i) production of liquid hydrocarbons by Fischer-Tropsch, said Fischer-Tropsch producing an off-gas,
(ii) production of a mixture comprising CO and H₂ from said Fischer-Tropsch off-gas,
(iii) conversion of CO from said mixture by a shift reaction, so as to produce a mixture enriched in H₂, and
(iv) purification of H₂ from the enriched mixture, by generating a H₂ product stream and an H₂-off gas stream, and
(v) production of CO₂ from said H₂-off-gas stream.

## Description

### TECHNICAL FIELD

The present invention relates to the field of Fischer-Tropsch and more particularly to the valorization of valuable components present in an off-gas generated by a Fischer-Tropsch plant.

### PRIOR ART

Fischer-Tropsch is a refining process to convert a hydrocarbon feedstock (coal, natural gas, biomass, etc.) into longer-chain hydrocarbons such as paraffins. Hydrocarbons feedstocks are converted into liquid synthetic fuels either via direct conversion or via generation of syngas as an intermediate using the Fischer-Tropsch process as example.

Fischer-Tropsch produces an off-gas or effluent (FT off-gas) which is a gas mixture containing a high proportion of CO₂ and CH₄, other components such as CO, H₂, N₂ in lower proportions and olefins (hydrocarbon molecules having high molecular weights).

According to the prior art, the Fischer-Tropsch off-gas is either used as fuel or in gas-turbines for power generation. The complex composition of said off-gas makes difficult direct processing via traditional routes for separating different components therefrom.

Applicant has set itself the objective of valorizing the components contained in the Fischer-Tropsch off-gas.

### SUMMARY OF THE INVENTION

This objective is achieved using a process for generating Fischer-Tropsch liquid hydrocarbons and for generating H₂ and CO₂ from a Fischer-Tropsch off-gas, comprising the steps of:
(i) production of liquid hydrocarbons by Fischer-Tropsch, said Fischer-Tropsch producing an off-gas,
(ii) production of a mixture comprising CO and H₂ from said Fischer-Tropsch off-gas,
(iii) conversion of CO from said mixture by a shift reaction, so as to produce a mixture enriched in H₂, and
(iv) purification of H₂ from the enriched mixture, by generating a H₂ product stream and an H₂-off gas stream, and

### (v-c) production of CO₂ from said H₂-off-gas stream.

The process according to the invention allows for convenient, direct, and useful processing of an off-gas generated by a plant as feedstock in order to produce hydrogen and carbon dioxide. By producing hydrogen and CO₂ (for EOR, sequestration or merchant market), the Fischer-Tropsch off-gas becomes a greater asset to Fischer-Tropsch facilities. Said off-gas can be a heavy paraffin synthesis off-gas. Hence, the process according to the invention allows producing liquid hydrocarbons with hydrogen and carbon dioxide as co-products.

Typically, a Fischer-Tropsch off-gas contains the following components (% in volume):
- at least 20%, preferably at least 25%, and more preferably at least 28% of CO₂, and/or
- at least 20%, preferably at least 25%, and more preferably at least 28% of CH₄, and/or
- at least 15%, preferably at least 18%, and more preferably at least 20% of CO, and/or
- at least 5%, preferably at least 8%, and more preferably at least 12% of H₂, and/or
- at least 1 %, preferably at least 5%, and more preferably at least 8% of N₂, and/or
- at least 0.2%, preferably at least 0.5%, and more preferably at least 1 % of Ar, and/or
- at least 1%, preferably at least 2%, and more preferably at least 3% of carbon molecules having two or more carbon atoms

The step (i) is performed by the Fischer-Tropsch process, involving a series of chemical reactions that convert a mixture of CO and H₂ into a variety of hydrocarbons (ideally CₙH₂ₙ₊₂).

To produce the CO & H₂ gases required for the Fischer-Tropsch, several reactions are required to transform the feedstock:
- for a solid feedstock (coal, biomass for example), a gasification step is particularly required to produce a gaseous mixture of H₂ & CO.
- for Gas to Liquid process, using gaseous feedstock as Natural Gas, a partial oxidation is used to convert CH4 into CO & H₂ and a water gas shift reaction is used to adjust H₂/ CO ratio before entering the Fischer-Tropsch section.

Generally, Fischer-Tropsch reactions are done at high temperature, between 150-350°C. The higher the temperature is, the higher the conversion rate is and the faster the reactions are. However, a higher temperature also favors CH₄ production.

Fischer-Tropsch catalysts are very sensitive to sulphur: all sulphur traces have to be removed before entering the Fischer-Tropsch reactors.

Step (ii) can be performed by oxygen blown processes, such as Autothermal reforming or Partial Oxidation or by Steam Methane Reforming. Step (ii) allows producing a mixture of CO and H₂ (syngas) from said Fischer-Tropsch off-gas.

Partial oxidation (POX) is a type of combustion via the following reaction: CnHm + n/2 O₂ >> nCO + m/2 H₂ + heat. It occurs when a sub-stoïchiometric fuel-oxygen (or air) mixture is partially combusted in a reactor thus generating a mixture syngas.

Steam-methane reforming (SMR), is a method for producing a mixture of hydrogen and carbon oxides from hydrocarbon fuels such as natural gas. This is achieved in a fired tubular reformer where hydrocarbons are reacted with steam at high temperature and pressure on a Nickel-based catalyst. SMR is widely used in industry for the production of hydrogen. Since the steam methane reaction is endothermic, external heat has to be supplied to the catalyst tubes in which the reaction which takes place converts steam and lighter hydrocarbons such as methane, biogas or refinery feedstock into hydrogen and carbon monoxide (syngas) according to the chemical equation CH₄ + H₂O → CO + 3H₂.

Autothermal reforming (ATR) is a combination of a combustion zone and a steam reforming zone occurring on a Nickel-based catalyst. The oxygen acts as a source for internal combustion of the feedstock thereby enhancing conversion of hydrocarbons and proving heat for the final steam reforming reaction. It is a stand-alone process in which the entire hydrocarbon conversion is carried out in a single reactor aided by internal combustion with oxygen.

Additionally, the large hydrogen demands from world-scale Fischer-Tropsch plants will in some cases exceed the capacity limits of SMR-based technology. By selecting oxygen-blown reforming technology, single train capacities are increased beyond that which is currently feasible when SMR technology is employed. Oxygen-blown reforming technology also allows for higher reforming pressures, which allows better use of the high pressure Fischer-Tropsch off-gas by reducing associated compression costs.

The CO-content of the Fischer-Tropsch off-gas is such that metal dusting can be a concern. The olefin/CO₂-content of the Fischer-Tropsch off-gas is such that carbon cracking can be a concern. The selection of oxygen-blown reforming technologies, such as ATR or POX, avoids this in a two-fold manner: by restricting the feed preheat level and taking advantage of the high-temperature combustion zone allow to keep the metal dusting and carbon cracking reaction kinetics in a range where the effects are not harmful to equipment.

The syngas mixture is preferred to be generated at step (ii) via ATR technology which enables to treat larger flow rates and to obtain higher H₂/CO ratios.

Step (iii) is performed through a shift reactor which allows converting carbon monoxide into hydrogen via the following reaction: CO + H₂O <> H₂+CO₂ which occurs in an adiabatic vessel in the presence of a catalyst. The syngas obtained is enriched in CO₂ and H₂.

Step (iv) can be performed by Pressure Swing Adsorption (PSA) or by methanation.

Pressure swing adsorption (PSA) is a purification batch process based on the adsorption physical phenomenon where impurities are absorbed at high pressure in fixed-bed adsorbers and desorbed by "swinging" the adsorber's pressure from the feed to a lower pressure (tail gas pressure). The desired component H₂ is not adsorbed and is recovered at high purity. Multiple adsorbers operate in a staggered sequence to produce constant H2 product flow.

Methanation is a catalytic process implemented to convert the remaining CO contained in the H₂-rich mixture generated by step (iii) into methane. The following main reaction describes the methanation: CO + 3H₂ → CH₄ + H₂O and occurs in an adiabatic vessel. Methanation is always combined to an upstream CO₂ removal.

Methanation only enables to produce impure H2 as it generates methane. It can be a cost effective option when impure H2 is required.

Advantageously, the process comprises at least one step of CO₂ production or removal (step v)
(v-a) before step (ii), and/or
(v-b) between step (iii) and (iv)
(v-c) after (iv).

The carbon dioxide removal step is able to separate the carbon dioxide from other components with marginal cost investment.

At least one of said step (v-a) (v-b) and (v-c) of CO₂ production or removal steps can be performed by cryogenic separation or by chemical absorption.

For the purpose of this application, "cryogenic" is intended to cover temperatures below -10°C, or below -50°C.

Chemical absorption can be an amine wash-type system which is a process well known by a skilled person.

Preferred embodiment is to implement a cryogenic separation of CO₂. Cryogenic separation of carbon dioxide can comprise a first sub-step of partial condensation of a gas mixture in conditions close to the triple point of carbon dioxide so that the carbon dioxide of the mixture becomes liquid. Liquid carbon dioxide forms only at pressures above 5.11 atm. The triple point of carbon dioxide is about 5.11 atm at -56.6 °C. The cryogenic separation can comprise a second sub-step of separation of the CO₂ liquid from the gases of the mixture.

The aim of the cryogenic separation is based on partial condensation, with the process operating temperature as close as possible to the triple point of carbon dioxide in order to recover a maximum of CO₂ in the liquid phase. If the CO₂ purity in this liquid phase is not sufficiently high, a distillation of methane and carbon monoxide can be integrated into the process to allow for the production of very pure carbon dioxide. The result is that the impurities are at the parts per million level or below.

Partial condensation of the CO₂ can be obtained by means of a combination of a relatively high operating pressure (e.g., 5.11 atm) and a relatively very low operating temperature (-56.6°C), or a combination of a relatively very high operating pressure (e.g., 7.38 atm) and a relatively low operating temperature (e.g., 31.1°C). It can be easier and less expensive to select the second option according to which the operating pressure of the gas mixture is increased and the operating temperature is to be low instead of to be very low, so as to get the triple point of the carbon dioxide.

Then, cryogenic separation can further comprise a preliminary sub-step of compression of the gas mixture to enable a higher operating pressure to enhance CO₂ extraction through low temperature partial condensation. This preliminary sub-step can be followed by another sub-step of drying the gas mixture for removing water therefrom.

Said steps (v-b) and (v-c) of CO₂ removal can be combined in a single cryogenic unit.

The cryogenic unit can comprise compact-type multi-fluid heat exchangers, cryogenic pressure vessels, and a cryogenic distillation column with distillation packing. Aluminum brazed heat exchangers (BAHX) have been developed specifically for the multi-fluid heat exchange needed in industrial applications. This compact technology is particularly well-suited in terms of arrangement, cost and heat exchange efficiency for performing cryogenic separation.

The cryogenic separation step allows producing two streams:
- a first carbon dioxide-rich product stream, with a purity which can be greater than 99.9%, which exits the cryogenic unit as a gas at ambient temperature and medium or high pressure, and
- a second "uncondensed" residual stream which exits the unit as a gas at ambient temperature and high pressure.

After CO₂ is removed (first stream) from the gas mixture, it can be compressed to reach a higher delivery pressure and sometimes liquefied at elevated pressure.

Gases which are not condensed in the cryogenic unit still contain residual carbon dioxide and hydrogen. They can be treated through a system of membranes for further enhancement of CO₂ and H₂ recoveries.

H₂ membrane technology is based on gas permeation process and consists in contacting feed gas at high pressure with membrane fiber to allow fast gas H₂ to pass through membrane while slow components like CO or CO₂ remain at high pressure and produces a H2-enriched gas called permeate and a H₂-depleted gas called residue.

A two stages membrane system can be implemented. The first stage enables to recover a hydrogen-rich gas. The residue of this first stage, still rich in CO₂ (and also still containing H₂), is then sent to the second stage to recover a CO₂-rich gas. The final residual gas from the membranes can be sent at low pressure to the fuel gas system.

The hydrogen-rich gas obtained from the first membrane stage can be recycled to the inlet of the PSA, thus enhancing the overall hydrogen recovery and the carbon dioxide-rich gas obtained from the second membrane stage can be recycled in the main compression chain of the CO₂ cryogenic separation unit in order to enhance the CO₂ recovery of the cryogenic separation.

Possible alternate configurations:
The process can comprise, before step (ii), a step (x) of conversion of CO from said off-gas by a shift reaction. Said shift reaction at step (x) can be isothermal.
The process can comprise, before step (ii), a step (y) of separation of H₂ and/or CO₂ from the off-gas by means of at least one membrane similar to the one discussed above.
The H₂ separated from the off-gas at step (y) can be submitted to at least one of steps (iii), (iv), (v-b) and (v-c).
The residue obtained at step (y) can be submitted to step (ii).
The process can comprise, before step (ii), a step (z) of preparing a feedstock by mixing a feed gas with said off-gas. The feed gas can be a natural gas.
The process can comprise at least one step (o, o') of treatment of the complementary feedstock to the Fischer-Tropsch off gas through a cobalt/molybdenum based catalyst bed and/or a desulphurization catalyst bed. Desulphurization or hydrodesulfurization (HDS) is a catalytic adsorption process widely used to remove sulfur (S) from natural gas and from refined petroleum products such as gasoline or petrol, jet fuel, kerosene, diesel fuel, and fuel oils in order to reduce the sulfur dioxide (SO₂) emissions that result from using those fuels. In an industrial hydrodesulfurization unit, such as in a refinery, the hydrodesulfurization reaction takes place in a fixed-bed reactor at elevated temperatures ranging from 300 to 400 °C and elevated pressures ranging from 30 to 130 atm of absolute pressure, typically in the presence of an alumina based catalyst impregnated with cobalt and molybdenum (usually called a CoMo catalyst).

### BRIEF DESCRIPTION OF THE DRAWINGS

The invention will be better understood and other objects, details, features and advantages thereof will become more clearly apparent during the course of the detailed explanatory description which follows, of non-limiting embodiments given with reference to the attached drawings, in which:
- figure 1 schematically depicts the process according to the state of the art for generating hydrogen from a Gas to Liquids off-gas; and
- figure 2 to 4 schematically depicts various embodiments of the process according to the invention.

### MORE DETAILED DESCRIPTIONS

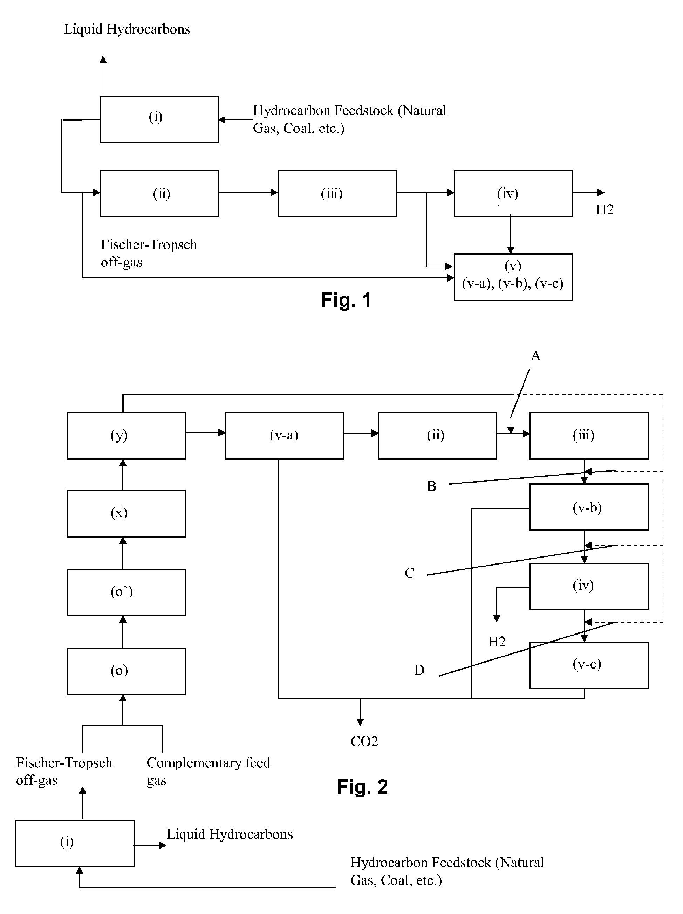

Figure 1 shows the elementary steps of the process according to the invention for generating liquid hydrocarbons by Fischer-Tropsch and for further generating hydrogen (H₂) and carbon dioxide (CO₂) from an off-gas produced by said Fischer-Tropsch. As shown, the process according to the invention comprises five successive steps which are referenced by items (i), (ii), (iii), (iv) and (v), respectively.

These steps are:
(i) production of liquid hydrocarbons from a Fischer-Tropsch process
(ii) production of a mixture comprising CO and H₂ from a Fischer-Tropsch off-gas,
(iii) conversion of CO from said mixture by a shift reaction, so as to produce a mixture enriched in H₂,
(iv) purification of H₂ from the enriched mixture, and
(v) production of CO2.

### Step (i): Production of liquid hydrocarbons from a Fischer-Tropsch process

Fischer-Tropsch is a refining process to convert a hydrocarbon feedstock (coal, natural gas, biomass, etc.) into longer-chain hydrocarbons such as paraffins. Hydrocarbons feedstocks are converted into liquid synthetic fuels either via direct conversion or via generation of syngas as an intermediate using the Fischer-Tropsch process as example. Fischer-Tropsch produces an off-gas or effluent (FT off-gas) which is a gas mixture containing a high proportion of CO₂ and CH₄, other components such as CO, H₂, N₂ in lower proportions and olefins (hydrocarbon molecules having high molecular weights).

### Step (ii): Production of a mixture comprising CO and H₂ from said Fischer-Tropsch off-gas

Step (ii) consists in generating syngas from the Fischer-Tropsch off-gas which can be performed by oxygen blown reforming, such as ATR or POX, or by Steam Methane Reforming (SMR). The major interest of POX and ATR is that it can be operated at elevated pressure, and so produce a hydrogen-rich mixture at elevated pressure. It is then not necessary to compress the produced hydrogen thereafter. ATR has main advantages: it avoids soot formation, it produces a H₂/CO ratio higher than POX, and may treat higher flow rates.

Step (iii): Conversion of CO from said mixture/syngas by a shift reactionThe (water-gas) shift reaction enables to increase partial pressure of H2.

The technology used may be a High Temperature Shift or a High Temperature Shift + Low Temperature Shift or an Isothermal Shift or an Isothermal Shift + Low Temperature Shift.

The Isothermal Shift is a tubular catalyst filled reactor which uses the heat generated by the water-gas shift reaction to produce steam from boiler feed water (BFW). The reformed gas is passed through catalyst filled tubes submerged in boiler feed water, and steam is generated by heat transfer from the reformed gas to the boiler feed water. An isothermal shift reactor may be preferred because it enables a higher conversion rate. It is a catalyst-filled tubular reactor that uses BFW as a heat sink for the exothermic water-gas shift reaction to generate process steam. The shift gas may be further cooled by preheating BFW, regenerating amine solution, and air and water cooling.

### Step (iv): Separation of H₂ from the enriched mixture/syngas

Step (iv) can be performed by PSA or methanation. PSA can be used to have a pure H₂. A methanator can be used if production of impure H₂ (containing residual methane) is acceptable and if substantially all the CO₂ is removed from the gas mixture before step (iv) as will be discussed below.

PSA allows adsorbing most of the components that would be considered impurities in the hydrogen. This includes, but is not limited to, carbon dioxide, carbon monoxide, unconverted hydrocarbons from the reforming step, and nitrogen. These impurities are contained in an off-gas of the PSA which is known as tail gas and which can be recycled as will be discussed below.

### Step (v): production of CO₂

Step (v) and in particular sub-steps (v-a), (v-b) and (v-c) will be explained below.

Figure 2 shows a first embodiment of the process according to the invention, said process comprising the above-mentioned steps (i), (ii), (iii), (iv) and additional step (v) of CO₂ removal and other steps.

Before step (ii) of syngas generation by POX, ATR or SMR, and after step (i) of liquid hydrocarbons production from Fischer-Tropsch process, the process can comprises five successive steps or sub-steps (o), (o'), (x), (y) and (v-a) as shown on Figure 2.

### Steps (o) and (o'): Off-gas or feedstock pretreatment: respectively cobalt/molybdenum (CoMo) treatment and hydrodesulphurization (HDS)

It is assumed that off-gases from Fischer-Tropsch plants will be sulfur-free. However, in case where an additional feed gas, such as natural gas for example, is used and mixed with a Fischer-Tropsch off-gas to increase H2 production, it can be necessary to use the hydrodesulphurization step. Due to too important CO and CO₂ content in the Fischer-Tropsch off-gas, the off-gas is preferably not submitted to the CoMo treatment when not mixed with a complementary hydrocarbon feedstock like natural gas for example (because of methanation reaction issues).

The hydrodesulphurization step can be performed in a hydrogenation reactor and two desulfurization reactors. In the hydrogenation reactor, organic sulfur is converted to H₂S and olefins are saturated. In the desulfurization step, the H₂S is adsorbed onto the zinc-oxide catalyst to form zinc-sulfide and water. The main objective of the CoMo/HDS section is to hydrogenate sulphur into H₂S and to further remove H₂S, especially when natural gas is used as feed gas. It also enables to hydrogenate olefins (useful to avoid coking issues during the shift reaction in step (iii) and/or in during the syngas generation in step (ii)).

### Step (x): Conversion of CO from the off-gas or feedstock by a shift reaction

The shift reaction step (x) enables to convert CO and H₂O from the off-gas or feedstock into CO₂ and H₂. It also enables to drastically reduce the CO partial pressure, which limits metal dusting issues. More particularly, this is interesting when combined with steps (y) and (v-x) which will be described below, as it enables to increase the CO₂ content and so to improve the CO₂ recovery of these steps.

### Step (y): Separation of H₂ and CO₂ from the off-gas or feedstock by means of membranes

A first-step membrane system can be used to separate H₂ and a second-step membrane system can be used to separate CO₂ from the off-gas or feedstock. Each membrane system enables to separate H₂/CO₂ from other components. The membrane system efficiency is favoured if a high difference of pressure (delta P) can be applied through the fibers. It can therefore be of an important interest to compress the membrane feed before entering the membrane and, by this way, to increase the delta P between the membrane feed and the permeate.

The membrane's permeate, according to its CO content, can be recycled upstream and/or downstream the shift reaction (step (iii), see arrows A, B and C) and/or in the off-gas produced by step (iv) (H₂ separation step such as PSA, see arrow D).

Preferably, a feed compression is performed upstream the membrane treatment to optimize H₂/CO₂ recovery.

### Step (v-a): CO₂ removal

CO₂ removal can be performed by chemical or cryogenic separation. It enables to partially or totally remove the CO₂ from the off-gas or feedstock. It also enables to favour the shift reaction in step (iii) and to reduce downstream equipment size, especially, to stay in one train instead of several.

In case where a chemical separation is used, an absorber with circulating amine solution is preferred to remove CO₂ from the feed. This enables to favor the shift reaction in step (iii) and to enhance the H₂ production yield. The cleaned gas is then sent to the next stage in the process. Carbon dioxide is chemically absorbed by the amine which is further regenerated by stripping. The CO₂ exiting the stripper can then be compressed with the CO₂ produced in the other CO₂ removal steps (v-b) and (v-c) that will be described herebelow.

Preferably, a feed compression is performed upstream CO₂ removal at step (v-a) (when it is performed by cryogenic separation) for optimizing CO₂ recovery.

### Step (v-b): CO₂ removal

CO₂ removal step (v-b) is performed to recover CO₂ from the mixture (shifted gas) produced by the shift reaction (step (iii)).

This CO₂ removal step can be potentially a physical separation or a chemical separation or a cryogenic separation. It enables to partially or totally extract the CO₂ from the shifted gas. More particularly step (v-b) can be coupled with step (v-c), in order to increase the CO₂ production.

When the syngas generation at step (ii) is processed under elevated pressure, and in case CO₂ removal at step (v-b) is performed by cryogenic separation, there is probably no need for further compressing the mixture before entering the cryogenic separation unit as we already are at an elevated enough pressure. Also, in case there are no stringent limits about CO₂ product impurities, the cryogenic separation unit lay-out may be reduced to a few liquid/vapour separation vessels only, and no distillation columns.

As the CO₂ recovery of a CO₂ cryogenic purification step is not 100% (almost 98%), in the specific case where we wish to reach about 100% CO₂ recovery (more particularly when using a methanator in step (iv)), we may use a combination of two CO₂ removal steps, one performed by cryogenic separation and another one performed by amine separation. Indeed, in case a methanator is used, the complete removal of CO₂ is required to avoid any methanation reaction issues. In this particular case a CO₂ removal based on a chemical separation is required upstream of the methanator

### Step (v-c): CO₂ removal

This step enables to remove the CO₂ from the tail-gas produced by step (iv) (i.e., PSA) and may be coupled with former CO₂ removal step (v-b) as described above.

Coupling between two CO₂ removal steps can consist in using the same heat exchanger (such as BAHX) to perform both steps.

When a PSA is used at step (iv), its tail-gas can be treated at step (v-c).

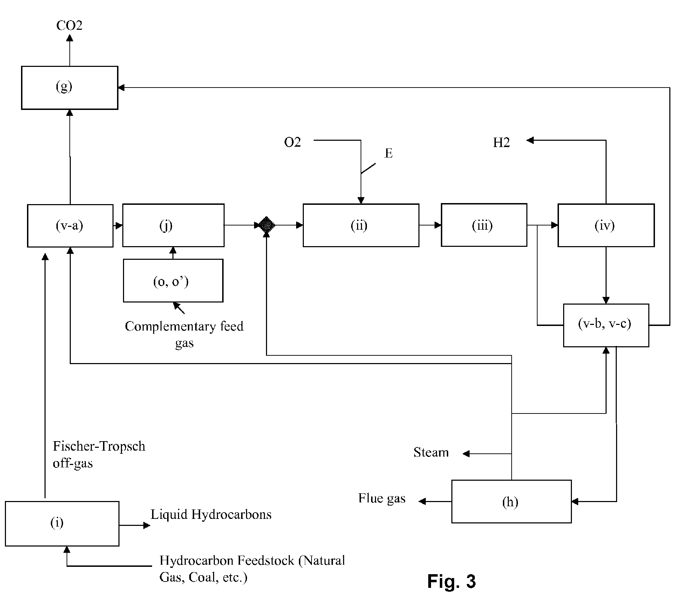

Figure 3 shows a second embodiment of the process according to the invention, said process comprising the above-mentioned steps (i), (ii), (iii) and (iv), the steps (v-a), (o), (o'), (x), (v-b) and (v-c), and further comprising steps or sub-steps (g), (h) and (j) of respectively CO₂ compression, uncondensable valorization, and compression of the step (i) feed,

### Step (g): Compression of the CO₂

CO₂ produced by steps (v-a), (v-b) and (v-c) is compressed to reach the required delivery pressure. All CO₂ product streams coming from all CO₂ removal steps can be therefore compressed in the same compressor.

### Step (h): uncondensable valorization

The uncondensable produced by steps (v-b) and (v-c) still has a low heating value. It may be valorised in Fired-Heaters to preheat feeds (natural gas, Fischer-Tropsch off-gas, oxygen, etc.) for the syngas generation (step (ii)) or to produce steam for heating and export and/or be expanded in an expander for power generation for example

### Step (j): Compression of the Fischer-Tropsch off-gas and/or complementary feedstock

Compression may be of interest when hydrogen is required at elevated pressure also allowing taking profit of high pressure oxygen-blown processes at step (ii) (ATR and POX). The feed gas compression is here combined with the off-gas compression.

As depicted in Figure 3, the Fischer-Tropsch off-gas is subjected to a CO₂ removal step (v-a) before to be mixed and compressed (step (j)) with the complementary feed gas, which is treated beforehand by a CoMo/HDS treatment (steps (o,o')). Arrow E designates the feeding of oxygen for performing the syngas generation in case of ATR or POX.

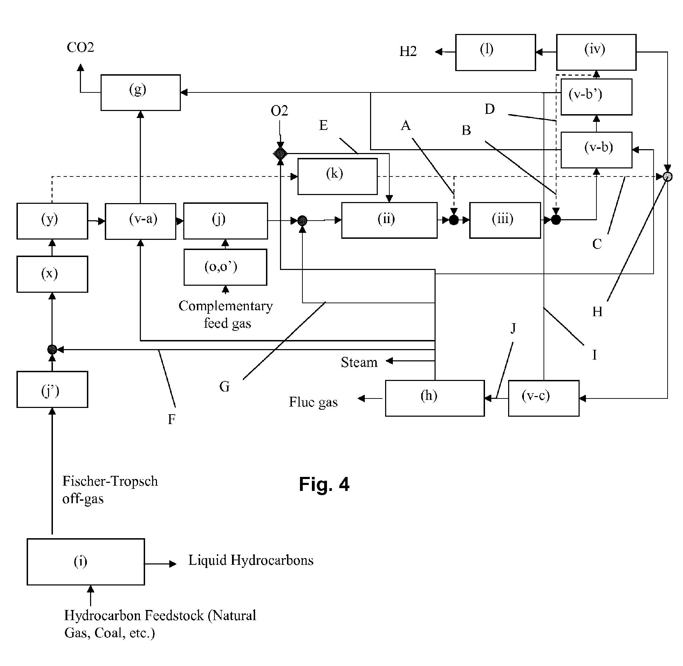

Figure 4 shows a third embodiment of the process according to the invention, said process comprising the above-mentioned steps (i), (ii), (iii) and (iv), the steps (o), (o'), (j), (x), (y), (v-a), (v-b), (v-c), (g), (h), and (j), and further comprising steps or sub-steps (j'), (k) and (I) of Fischer-Tropsch off-gas compression, CO₂ compression and H₂ compression, respectively.

### Step (j'): Compression of the Fischer-Tropsch off-gas

The Fischer-Tropsch off-gas is compressed at step (j') before to be submitted to steps (x), (y) and (v-a). This is advantageous because it allows optimizing CO₂ and H₂ recovery at steps (y) and (v-a)

After step (v-a), the off-gas is mixed with the feed gas to be compressed at step (j) before the syngas generation step (ii).

### Step (k): Compression of the membrane permeate

The permeate produced by the separation step (y) by means of the membranes is compressed before to be submitted to following steps according to arrows A, B, C and D described above. This compression may be used to increase the membranes delta P through the membranes of step (y) in order to recover more H₂/CO₂. The membrane permeate would then require to be compressed before recycling it at several points as explained above.

### Step (I): Compression of H₂

The H₂ produced by step (iv) (such as PSA) is compressed if we need to have it at more elevated pressure. This step (I) can be coupled with at least one of steps (j) and (j') in order to find the economic optimum between compressing the off-gas and the feedstock and compressing the hydrogen.

The feedstock exiting the compressor at step (j) can be preheated before the syngas generation step (ii). The feedstock can be preheated by the effluent produced by the syngas generation or by the steam produced by the uncondensable valorization at step (h) (arrow F).

### Steps (v-b) and (v-b'): Two CO₂ removal steps

In the third embodiment, 100% CO₂ recovery is intended and two successive CO₂ removal steps are required, preferably a chemical separation and a cryogenic separation. As discussed above, these steps are performed to recover CO₂ from the shifted gas generated by step (iii), the removed CO₂ being compressed at step (g) while the residue is sent to PSA or the methanator at step (iv).

As far as the chemical separation is concerned, an upstream amine wash is preferred to remove carbon dioxide from the incoming mixture. The cryogenic separation utilizes a combination of membrane technology and cryogenic distillation to achieve a high purity and rate of carbon dioxide capture as described above.

### EXAMPLE

The following example is based on the process of the invention according to the third embodiment shown in Figure 4.

Natural gas is fed into a Fischer-Tropsch process, producing liquid hydrocarbons and a Fischer-Tropsch off-gas.

The Fischer-Tropsch off-gas comprising a mixture of the following gases CO₂ (28%), CH₄ (28%), CO (20%), H₂ (12%), N₂ (8%), Ar (1%) and carbon molecules having two or more carbon atoms (3%) is processed according to the invention to produce both CO₂ and H₂ gases.

The Fischer-Tropsch off-gas is compressed (step (j')) and preheated by steam (arrow F) before to be submitted to the first shift reaction (step x) for transforming its CO and H₂O into CO₂ and H₂. The CO₂ and H₂ mixture is then submitted to membranes intended to separate CO₂ from the mixture, the permeate comprising the CO₂ and the residue/off-gas comprising the rest of the gases and namely H₂. The off-gas is then submitted to the CO₂ removal step (v-a) by amine wash separation to separate CO₂ from the off-gas which is then compressed at step (j).

Natural gas is used as feed gas to be mixed with the Fischer-Tropsch off-gas. The feed gas is submitted to CoMo/HDS treatment (steps (o, o')) before to be mixed with the off-gas and compressed at step (j) to form a compressed feedstock.

The feedstock is preheated to approximately 250-450°C (preferred 360°C), depending on olefin content, by the effluent produced by the syngas generation (step (ii)) or by the steam produced by the off-gas valorization at step (h) (arrow G).

The syngas generation step (ii) is performed by autothermal reforming (ATR). After the common compression step (j), steam from a boiler can be added to achieve a steam to carbon ratio of approximately 3.0 mol H₂O/mol C. The high steam to carbon ratio was chosen to maximize hydrocarbon conversion in the syngas generation step (i) and minimize CO-slip from the CO-shift reactor (step (iii)). ATR is chosen to perform step (ii) because it enables to treat higher flow rates, also because the ratio H₂/CO is more elevated than with a POX, and also because it is a clean process (no soot formation).

The feedstock is then preheated to 400°C before being sent to the ATR (step (ii)). While the lower ATR feed preheat temperature will increase oxygen consumption, the kinetics of the metal-dusting reaction are insignificant at this temperature, thus allowing the use of Fischer-Tropsch off-gas as feed for hydrogen production. Oxygen and shielding steam are also injected into the ATR at this stage.

The hot syngas leaves the ATR at approximately 1000°C and can be passed through said boiler to generate the steam discussed above. The hot syngas is then used to preheat the feedstock. After preheating the feedstock, the hot syngas is then sent to a boiler feed water (BFW) preheater, where BFW is preheated before being sent to the steam drum. The BFW preheater regulates the inlet temperature to the CO-shift reactor (step (iii)). After the shift gas has been cooled, it is routed to a PSA (step (iv)) where the hydrogen product will be separated before being compressed at step (I).

As explained above, when the syngas generation (step (ii)) is processed under elevated pressure, and in case CO₂ removal (steps (v-b) and (v-b')) is performed by cryogenic separation, upstream the H₂ separation step (step (iv)), there is probably no need for compressing before entering the cryogenic separation unit as we already are at an elevated enough pressure.

PSA tail gas is compressed in the first stages of a multi-stage compressor (H), whereafter a carbon dioxide-rich stream from the membrane modules (step (y)) is added as an interstage feed gas to the compressor. It can be also recycled at the inlet of the compressor to maximize the pressure difference between feed gas and permeate of the membranes. The combined gas streams are then further compressed to the required operating pressure.

The cryogenic separation unit used for CO₂ removal at step (v-c) allows separating CO₂ from the other components of the PSA tail gas stream by a combination of partial condensation and CO/CO₂ distillation. The tail gas is separated into two streams, a pure carbon dioxide stream (I) with impurities such as argon, nitrogen, carbon monoxide, and methane at the parts per million level, and a "fuel gas" stream (J) containing the non-condensable components and residual carbon dioxide and which can be submitted to step (h).

The pure carbon dioxide streams (I) are compressed at step (g) and/or condensed to its final product pressure.

The process according to the invention allows for convenient, direct, and useful processing of an off-gas produced by Fischer-Tropsch plant as feedstock in order to produce hydrogen and carbon dioxide as co-products.

## Claims

1. A process for generating Fischer-Tropsch liquid hydrocarbons and for generating H₂ and CO₂ from a Fischer-Tropsch off-gas, comprising the steps of:
(i) production of liquid hydrocarbons by Fischer-Tropsch, said Fischer-Tropsch producing an off-gas,
(ii) production of a mixture comprising CO and H₂ from said Fischer-Tropsch off-gas,
(iii) conversion of CO from said mixture by a shift reaction, so as to produce a mixture enriched in H₂, and
(iv) purification of H₂ from the enriched mixture, by generating a H₂ product stream and an H₂-off gas stream, and
(v-c) production of CO₂ from said H₂-off-gas stream.

2. The process of claim 1, wherein said Fischer-Tropsch off-gas is a heavy paraffin synthesis off-gas.

3. The process of claim 1 or 2, comprising another step of CO₂ production
(v-a) before step (ii), and/or
(v-b) between steps (iii) and (iv).

4. The process of claim 3, wherein at least one of said steps (v-a), (v-b) and (v-c) of CO₂ production is performed by cryogenic separation or by chemical separation.

5. The process of claim 4, wherein said step (v-b) and (v-c) of CO₂ production are performed by cryogenic separation in a single cryogenic unit.

6. The process of any one of claims 1 to 5, wherein step (ii) is performed by oxygen blown reforming, such as ATR or POX, or by Steam Methane Reforming (SMR).

7. The process of any one of claims 1 to 6, wherein step (iv) is performed by Pressure Swing Adsorption (PSA) or by methanation.

8. The process of any one of claims 1 to 7, comprising, before step (ii), a step (x) of conversion of CO from said Fischer-Tropsch off-gas by a shift reaction.

9. The process of claim 8, wherein the shift reaction at step (x) is isothermal.

10. The process of any one of claims 1 to 9, comprising, before step (ii), a step (y) of separation of H₂ and/or CO₂ from the Fischer-Tropsch off-gas by means of at least one membrane.

11. The process of claim 10, wherein the H₂ separated from the Fischer-Tropsch off-gas at step (y) is submitted to at least one of steps (iii), (iv), (v-b) and (v-c).

12. The process of claim 10 or 11, wherein the residue obtained at step (y) is submitted to step (ii).

13. The process of any one of claims 1 to 12, comprising, before step (ii), a step (z) of preparing a feedstock by mixing a feed gas with said off-gas.

14. The process of claim 13, comprising at least one step (o, o') of treatment of the feed gas or the feedstock by passing it through a cobalt/molybdenum based catalyst bed and/or desulphurization catalyst bed.
